# EUROPÄISCHE PATENTSCHRIFT

(11) **EP 0 654 963 B1**
(45) Veröffentlichungstag und Bekanntmachung des Hinweises auf die Patenterteilung: **17.04.1996**
(21) Anmeldenummer: 93918885.0
(22) Anmeldetag: 14.08.1993
(51) Int. Cl.: A01D 43/00, A01F 15/00

(54) **SELBSTFAHRENDE BALLENPRESSE FÜR AUF DEM FELD ANGEBAUTE PFLANZEN**
AUTOMOTIVE BALING PRESS FOR PLANTS CULTIVATED IN THE FIELD
PRESSE-BALLES AUTOMOBILE POUR PLANTES CULTIVEES DANS LES CHAMPS

(30) Priorität: 17.08.1992 DE 4227194
(43) Veröffentlichungstag der Anmeldung: 31.05.1995
(73) Patentinhaber: FIRMA CLAAS OHG, D-33428 Harsewinkel (DE)
(72) Erfinder: WEIGELT, Horst, D-33332 Gütersloh (DE); FRERICHS, Ludger, D-48336 Sassenberg (DE)
(74) Vertreter: Patentanwälte Eisele, Otten & Roth
(86) Internationale Anmeldenummer: DE9300738
(87) Internationale Veröffentlichungsnummer: WO9404020

(56) Entgegenhaltungen:
- EP-A- 0 120 780
- EP-A- 0 408 850
- WO-A-82/03310
- WO-A-90/12492
- BE-A- 510 792
- DE-A- 1 962 777
- DE-A- 2 303 052
- DE-A- 3 004 431
- DE-A- 4 021 307
- DE-A- 4 119 749
- DE-C- 655 026
- DE-C- 3 941 092
- DE-U- 9 206 232
- FR-A- 1 452 660
- FR-A- 2 357 164
- FR-A- 2 468 292
- FR-A- 2 558 681
- FR-A- 2 621 777
- FR-A- 2 623 051
- GB-A- 2 187 417
- US-A- 2 504 279
- US-A- 2 754 652
- US-A- 3 584 428
- US-A- 4 972 664

## Beschreibung

Die Erfindung betrifft eine selbstfahrende Ballenpresse für auf dem Feld angebaute Pflanzen mit einem Fahrwerk, einem Motor, einem sich in Fahrtrichtung erstreckenden Preßkanal mit einem zugehörigen Kolben, einem von dem Motor angetriebenen Kurbelgetriebe mit quer zur Fahrtrichtung liegender Achse, das den Kolben bewegt, und mit einer Einrichtung zum Zuführen des Erntegutes zu dem Preßkanal. Eine derartige Ballenpresse ist aus der US-A-2 754 652 bekannt.

Sogenannte nachwachsende Rohstoffe, d.h. besonders schnell wachsende Pflanzen für die energetische oder stoffliche Verwendung, erfordern eine neuartige Erntetechnik. Solche Pflanzen sind insbesondere Chinaschilf (Miscanthus), Pfahlrohr (Arundo donax), Kenaf, Faserhirse usw.. Um die durch erfolgreiche züchterische Maßnahmen zu erwartenden gewichtsmäßig hohen Ernteerträge transportieren und weiterverwerten zu können, ist die Pflanzenmasse zu handhabbaren Ballen zu pressen.

Es sind zwar selbstfahrende Ballenpressen für Heu, Stroh und entsprechendes traditionelles Erntegut bekannt, beispielsweise aus dem US-Patent 2 754 652. Diese Maschinen haben einen einseitig auf dem Fahrgestell angeordneten Preßkanal. Der Fahrer beobachtet die Pick-up-Walzen von der Seite her. Bedingt durch diese Bauart ist die Leistung und Arbeitsbreite begrenzt. Die Verwendung solcher bekannter Strohpressen scheitert aber vor allem an der langen, dickstieligen, zähen und faserelastischen Struktur der genannten Pflanzen.

Ferner ist aus der deutschen Offenlegungsschrift 30 04 431 eine als Anhänger ausgebildete Vorrichtung zum Pressen von Rebhölzern zu Ballen bekannt. Diese Vorrichtung hat als Aufnehmer eine mehrzinkige, höhenverstellbare Gabel und nachgeordnet eine Zubringerwalze und ein Quetschwerk, um den abgeschnittenen Rebenzweigen eine gewisse Geschmeidigkeit zu verleihen und sie zum Pressen vorzubereiten. Eine solche Vorrichtung eignet sich jedoch nach ihrer Größe und Technologie offensichtlich nicht zum Ernten von Rohstoffpflanzen, wie sie einleitend beispielhaft angegeben sind.

Die US-Patentschrift 3 584 428 beschreibt eine mobile Maschine, welche traditionelle Futterpflanzen mäht, aufnimmt, zur Bereitung von Silage häckselt und mit einer vertikal arbeitenden Presse zu kleinen Ballen preßt, die mit einer Zusatzeinrichtung während der Fahrt über das Feld auch noch luftdicht verpackt werden. Mit dieser Maschine kann aber das Mengen- und Leistungsproblem beim Ernten von Rohstoffpflanzen ersichtlich nicht gelöst werden.

Eine als Großgerät konzipierte Flachsaufbereitungsmaschine mit einer leistungsfähigen Ballenpresse zeigt die deutsche Offenlegungsschrift 41 19 749. Hierin wird jedoch in erster Linie die Technologie der Flachsaufbereitung beschrieben, die sich von der Konditionierung von Rohstoffpflanzen zum Pressen stark unterscheidet. Die Schrift enthält keinen Hinweis dazu, wie die aufgesetzte Ballenpresse angetrieben ist.

Der Erfindung liegt die Aufgabe zugrunde, eine selbstfahrende Ballenpresse vorzuschlagen, mit der es möglich ist, Rohstoffpflanzen der einleitend bezeichneten Art in einem Durchgang direkt aus dem Bestand aufzunehmen und zu Großballen zu pressen.

Diese Aufgabe wird ausgehend von einer Ballenpresse der einleitend bezeichneten Art erfindungsgemäß dadurch gelöst, daß an der Fahrwerkfrontseite in der Mitte ein Fahrerhaus, hinter diesem der Motor mit querliegender Achse und hinter diesem das Kurbelgetriebe des in der Längsmittellinie des Fahrwerks liegenden Preßkanals angeordnet sind, wobei der Motor mit dem Kurbelgetriebe mechanisch getrieblich verbunden ist, daß die Zuführeinrichtung einen sich unter dem Fahrerhaus und dem Motor hindurch erstreckenden hochschwenkbaren Förderkanal und einen unter dem Kurbelgetriebe erstreckenden in seinem Verlauf ansteigenden, von unten in den Preßkanal mündenden Ladekanal umfaßt, wobei das vordere Aufnahmeende des Förderkanals eine erste Anschlußvorrichtung (12) für einen von mehreren für verschiedene Pflanzen bestimmten und wahlweise ansetzbaren Arbeitsvorsätzen oder für einen Aufbereiter aufweist und im Übergangsbereich zwischen dem hinteren Abgabeende des Förderkanals und dem Eingang des Ladekanals (34) ein Aufbereiter angeordnet ist.

Zum Antrieb des Kurbelgetriebes wird vorzugsweise auf eine bei schleppergezogenen Ballenpressen bekannte Anordnung zurückgegriffen, wo eine in Fahrtrichtung nach vorne weisende und schräg nach unten geneigte, mit einem Schwungrad bestückte Antriebswelle vorgesehen ist. Es wird vorgeschlagen, daß diese Welle mit einem Winkelgetriebe gekuppelt ist, dessen horizontale Eingangswelle mit dem Motor mittels eines Ketten- oder Riemenantriebs verbunden ist. Andererseits ist es auch möglich, das Kurbelgetriebe mit der parallel zur Kurbelwelle verlaufenden Motorwelle mittels eines Stirnradgetriebes zu verbinden.

Die im Vordergrund der Betrachtungen stehenden Miscanthus- und Arundo donax-Arten sind mehrjährig. Sie werden zwar in Reihen gepflanzt, wachsen dann aber im Laufe der Zeit auseinander, so daß sich der Erntemaschine ein nahezu reihenloses Feld bietet. Die als Bestandteil der Arbeitsvorsätze vorgesehenen Schneidwerke müssen daher reihenunabhängig arbeiten. Sie können als Messerbalken, als Schwing- oder Bandsäge oder in der Weise ausgebildet sein, daß die Pflanzenstengel abgequetscht werden. Sollten sich durch das Aufkommen anderer moderner Mäh- oder Schneidverfahren, welche die Pflanzen von den Wurzelstöcken trennen und sich ohne große Bodenbelastung durchführen lassen, die Schneidwerke erübrigen, so muß doch der Arbeitsvorsatz so ausgerüstet sein, daß er flächig am Boden liegendes (nicht geschwadetes) Erntegut aufnehmen kann. Deshalb ist vorteilhafterweise eine Auswechselmöglichkeit zwischen verschiedenen Schneidwerk- und Vorsatzbauarten vorzusehen.

Weiter kommt der Aufbereitungseinrichtung, welche gegebenenfalls aus mehreren einzelnen Aufbereitern besteht und die großen und störrischen Pflanzen zu einer preßfähigen Masse verarbeitet, große Bedeutung zu. Wenn nämlich das Erntegut nicht energetisch (durch Verbrennen) verwertet wird, sondern durch eine industrielle Weiterverarbeitung, z.B. zu Dämmstoffen, dann müssen unterschiedliche Forderungen der verarbeitenden Industrie bei der Aufbereitung berücksichtigt werden und das erfordert, daß der Aufbereiter verstell- und austauschbar ist. Beispiele für Aufbereiter sind Walzenpaare mit glatten, rauhen oder integrierten Mehrfachwerkzeugen zum Walzen, Aufrauhen, Knicken, Reißen und/oder Schneiden der Stengelware. Weitere Beispiele sind einzelne Rotoren, die mit oder ohne Gegenelemente wie Kämme, Messer usw. arbeiten und die vorrangig schneiden und reißen.

Schließlich ist es erforderlich, das Erntegut vom Aufnehmer oder Mähwerk über Aufbereiter der Ballenkammer zuzuführen. Die Zuführeinrichtung, die dies leistet, umfaßt u.a. einen hochschwenkbaren Förderkanal, dessen vorderes Aufnahmeende eine erste Anschlußvorrichtung für einen der Arbeitsvorsätze oder für einen Aufbereiter aufweist. Als hieran ansetzbarer Arbeitsvorsatz kommt in erster Linie ein reihenloses Trommelmähwerk mit mehreren Mähtrommeln in Betracht. Damit kann in den stehenden Bestand eingefahren werden. Sind die Pflanzen indessen schon gemäht, so kann als Arbeitsvorsatz ein Pick-up mit nachgeschalteter, zur Mitte fördernder Querschnecke vorgesehen sein. Schließlich besteht die Möglichkeit, mittels der ersten Anschlußvorrichtung einen Mähtisch mit Messerbalken, Haspel und Querförderschnecke, wie er in ähnlicher Weise bei Mähdreschern verwendet wird, an den Förderkanal anzusetzen. In dem Förderkanal kann, wie bei Mähdreschern bekannt, ein unterschlächtig arbeitender Bandförderer, eine Walzenstrecke oder ein anderes Fördermittel vorgesehen sein.

Mittels der ersten Anschlußvorrichtung kann aber auch an dem Förderkanal ein Aufbereiter angeschlossen und vor diesem mittels einer zweiten Anschlußvorrichtung einer der Arbeitsvorsätze angebracht sein. Für dickstielige Rohstoffpflanzen wird insbesondere vorgeschlagen, daß als Arbeitsvorsatz ein reihenloses Trommelmähwerk ausgewählt und der nachgeschaltete Aufbereiter so ausgebildet ist, daß das Erntegut durch Knicken, Reißen, Schneiden und/oder Auffasern verändert wird. Bevorzugt wird an dieser Stelle ein Aufbereiter aus zwei zusammenwirkenden, mit Messerklingen bestückten Walzen.

Auf das hinten liegende Abgabeende des Förderkanals folgt letzten Endes ein in seinem Verlauf zum Preßkanal ansteigender Ladekanal, in den eine Stopfgabel eingreift, die das Erntegut bei zurückgezogenem Preßkolben in die Ballenkammer schiebt. Es wird vorgeschlagen, daß im Eingangsbereich des Ladekanals ein vorzugsweise aus Messersternen zusammengesetzter Schneidrotor angeordnet ist. Diesem Schneidrotor können wahlweise zuschaltbare Gegenmesser zugeordnet sein, so daß unter Aufrechterhaltung der Förderfunktion die Schneid- oder Aufbereiterfunktion nach Bedarf und entsprechend dem Erntegut ein- und ausgeschaltet werden kann. Schließlich ist es zweckmäßig, zur Reinigung der Messersterne dem Schneidrotor eine sich im Querschnitt des Ladekanals erstreckende Abstreifeinrichtung zuzuordnen.

Um eine störungsfreie Übergabe des Fördergutes vom Förderkanal zum Schneidrotor sicherzustellen, wird vorgeschlagen, daß zwischen dem Abgabeende des Förderkanals und dem Schneidrotor eine unterschlächtig wirkende Fördertrommel angeordnet ist. Auf dem Mantel dieser Fördertrommel werden vorteilhafterveise stochastisch verteilte und/oder ungleich lange Förderpaddel oder Förderzinken angeordnet. Eine Fördertrommel dieser oder ähnlicher Art kann mit Vorteil auch an dem vorne liegenden Aufnahmeende des Förderkanals angeordnet werden, d.h. im Übergangsbereich zwischen dem Arbeitsvorsatz und dem Förderkanal.

Im Interesse eines störungsfreien Gutflusses durch die gesamte Zuführeinrichtung wird vorgeschlagen, daß die Drehzahlen der einzelnen Förder- oder Aufbereitungskomponenten unabhängig voneinander einstellbar sind.

Da bei Rohstoffpflanzen die unteren Stengelabschnitte besonders fest und energiereich sind, kommt es zur Vermeidung von Ernteverlusten mehr als bei anderen Erntemaschinen auf die Einhaltung einer genau definierten Stoppelhöhe an. Auch die Wuchsfreudigkeit und damit der Ertrag des Folgejahres hängen damit eng zusammen. Die günstigste Erntezeit liegt gewöhnlich im Winterhalbjahr, so daß es erforderlich ist, den Schnitt auch unterhalb einer liegenden Schneedecke ausführen zu können.

Hierzu wird vorgeschlagen, daß eine automatische Höhensteuervorrichtung für das Schneidwerk vorgesehen ist, welche die Einhaltung einer konstanten Schnitthöhe über der Bodenoberfläche oder der Eisoberfläche auch bei einer darüberliegenden Schneeschicht sicherstellt. Eine Trennung des aufgenommenen Schnees vom Erntegut kann im Bereich der Zuführeinrichtung erfolgen.

Es wurde schon erwähnt, daß die Anbauflächen von mehrjährigen Rohstoffpflanzen schon wegen der bevorzugten Erntezeit im Winterhalbjahr eine geringe Tragfähigkeit haben. Außerdem sind die im Boden verbleibenden Wurzelstöcke gegen Überfahren sehr empfindlich. Um deshalb die Flächenbelastung zu verringern, wird vorgeschlagen, daß die Ballenpresse ein Raupenfahrwerk, ein Halbraupenfahrwerk oder ein Fahrwerk mit mehr als zwei Achsen aufweist. Damit läßt sich die Flächenbelastung erheblich verringern oder umgekehrt das Gesamtgewicht der Maschine schadlos erhöhen.

Vor diesem technischen Hintergrund wird auch vorgschlagen, die Verletzung der Wachstumsschicht des Bodens durch folgenden Vorschlag weiter nachdrücklich zu verringern. Während bisher die Preßballen auf dem abgeernteten Feld jeweils nach Fertigstellung wahllos abgelegt und anschließend mittels eines Sammelfahrzeuges abtransportiert wurden, geht der neue Vorschlag dahin, daß die Ballenpressen einen Laderaum oder eine Ladeplattform zum Einlagern oder Mitführen mehrerer Ballen aufweist. Mindestens die während einer Überquerung des Feldes entstehenden Ballen werden demnach bis an den Rand des Feldes mitgeführt und erst dort abgelegt oder bei sehr großen Ernteflächen an bestimmten Zwischenstationen. Obwohl das Gesamtgewicht der mit mehreren Ballen voll beladenen Maschine beträchtlich zunimmt, wird doch durch den Wegfall einer Überfahrung die Anbaufläche insgesamt geschont. Außerdem wird durch diese konsequente Verwirklichung eines nicht absetzigen Ernteverfahrens die Ernte maschinell und personell rationalisiert.

Um die mitgeführten Ballen gezielt auf dem Boden absetzen und übereinanderstapeln zu können, wird weiter vorgeschlagen, daß die Ballenpresse eine entsprechende Stapelvorrichtung aufweist. Statt den Laderaum und/oder die Stapelvorrichtung unmittelbar auf dem Fahrwerk anzubringen, kann auch ein in der Spur laufender Anhänger vorgesehen sein, der diese Transportfunktionen ausführen kann.

Ein anderer wichtiger Gesichtspunkt bei der Ernte von Rohstoffpflanzen ist deren Lagerfähigkeit. Diese kann z. B. durch Ausbringen organischer oder anorganischer Hilfsstoffe, z. B. Harnsäure, auf das Erntegut bzw. durch Vermischen mit demselben verbessert werden. Es wird vorgeschlagen, daß an der Ballenpresse eine Vorrichtung zum Ausbringen solcher Stoffe, beispielsweise Sprühdüsen für flüssige Hilfsstoffe, angebracht sind, wobei sich als Ort der Anbringung insbesondere der letzte Teil der Aufbereitungseinrichtung oder der Ladekanal eignet. Eine andere Art, die Lagerfähigkeit zu verbessern, besteht darin, die Ballen möglichst dicht in eine Umhüllung einzuschlagen, z. B. durch Umwickeln mit einer Kunststoffolie. Eine Weiterbildung der Erfindung besteht darin, an der Maschine oder auf einem mitgeführten Anhänger eine Zusatzeinrichtung für diesen Zweck anzubringen.

Ein Ausführungsbeispiel der Erfindung wird nachfolgend anhand der Zeichnungen erläutert. Im einzelnen zeigt
- Fig. 1: einen schematischen Längsschnitt einer selbstfahrenden Großballenpresse mit Trommelmähwerk und anschließendem Aufbereiter,
- Fig. 2: die Seitenansicht einer Pick-up-Walze mit Querförderschnecke als alternativer Arbeitsvorsatz,
- Fig. 3: die Seitenansicht eines Mähtisches als weiterer alternativer Arbeitsvorsatz,
- Fig. 4: eine Seitenansicht einer anderen Antriebsverbindung zwischen dem Motor und dem Kurbelantrieb der Presse im größeren Maßstab und
- Fig. 5: die zentrale Förder- und Aufbereiterpartie vor dem Ladekanal als Ausschnittvergrößerung aus Fig. 1.

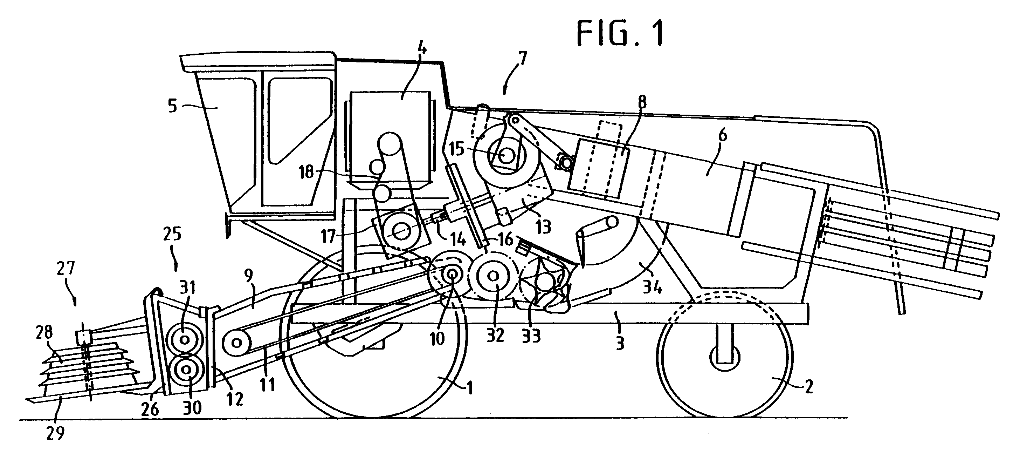

Ein vierrädriges Fahrwerk mit zwei großen Vorderrädern 1 und zwei kleineren lenkbaren Hinterrädern 2 trägt gemäß Fig. 1 einen Grundrahmen 3 und einen Antriebsmotor 4. Eine Fahrerkabine ist mit 5 bezeichnet. Wesentliche Teile der Presse sind eine querschnittlich rechteckige Ballenkammer 6, die nach hinten übersteht und sich leicht nach unten neigt sowie der Kurbelantrieb 7 des Preßkolbens 8. Ein Förderkanal 9 ist um eine Achse 10 höhenschwenkbar gelagert. Er enthält im Beispiel einen unterschlächtig arbeitenden Bandförderer 11. Am unteren bzw. vorderen Aufnahmeende des Förderkanals 9 ist eine als Verbindungsebene zu wertende Anschlußvorrichtung 12 angebracht.

Zu ihrem Antrieb beinhaltet die in Fig. 1 dargestellte Presse ein Winkelgetriebe 13, mittels dessen eine in Fahrtrichtung nach vorn und unten weisende Antriebswelle 14 mit der Kurbelwelle 15 verbunden ist. Diese Antriebswelle trägt auch ein Schwungrad 16. Ein weiteres Winkelgetriebe 17 befindet sich unter dem Motor 4. Seine Antriebswelle ist mit der dazu parallelen Motorwelle über Ketten 18 verbunden, während die Antriebswelle des Winkelgetriebes mit der Antriebswelle 14 der Presse gekuppelt ist.

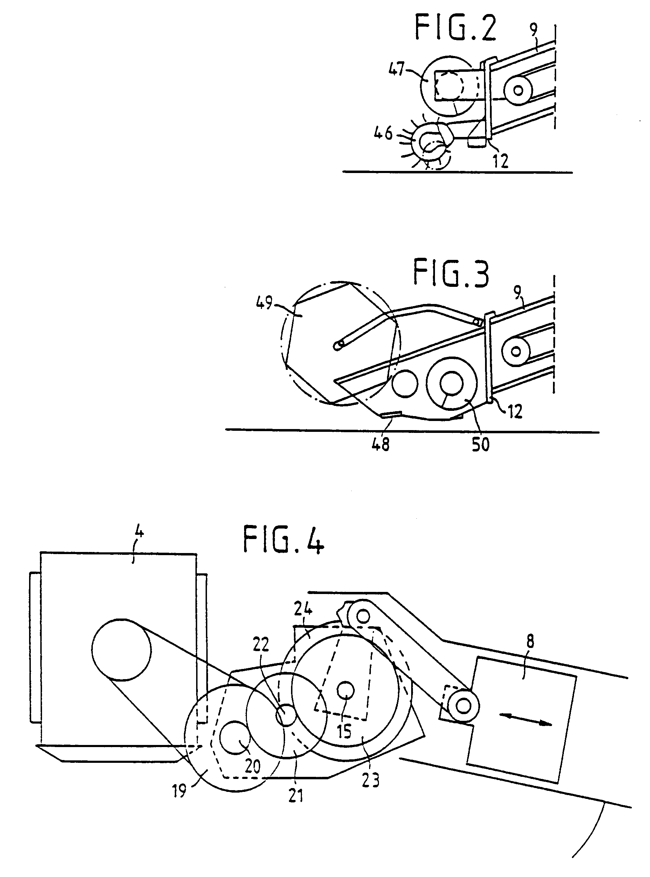

Eine Alternative zu dieser Antriebsanordnung zeigt Fig. 4. Hiernach treibt der Motor 4 eine erste Keilriemenscheibe 19, auf deren Welle ein Zahnrad 20 sitzt. Dieses kämmt mit einem weiteren großen Zahnrad 21, dessen Welle ein Zahnrad 22 trägt. Dieses wiederum kämmt mit einem Zahnrad 23, das unmittelbar auf der Kurbelwelle 15 befestigt ist, die außerdem eine Schwungscheibe 24 trägt.

Die Einrichtungen zum Zuführen und Aufbereiten des Erntegutes werden anhand von Fig. 1 wie folgt beschrieben. An der Anschlußvorrichtung 12 des Förderkanals 9 ist ein Aufbereiter 25 angesetzt und dieser trägt mittels seiner nach vorne gerichteten Anschlußvorrichtung 26 ein Trommeldrehwerk 27, das mehrere Trommeln 28 mit je einer Schneidscheibe 29 aufweist und nicht in Reihen stehende Pflanzen abmähen kann. Der Aufbereiter 25 besteht aus zwei horizontal gelagerten zusammwirkenden Walzen 30 und 31, die mit Messerklingen bestückt sind. Sie kürzen die gemähten Stengel so weit ein, daß die durch den Förderkanal 9 hochtransportiert werden können.

Am oben liegenden Abgabeende des Förderkanals 9 wird das Gut von einer Fördertrommel 32 erfaßt, welche es einem Schneidrotor 33 zuführt, der mit horizontaler Achse im Eingangsbereich eines nach oben gekrümmten Ladekanals 34 angeordnet ist, welch letzterer von unten in die Ballenkammer 6 mündet.

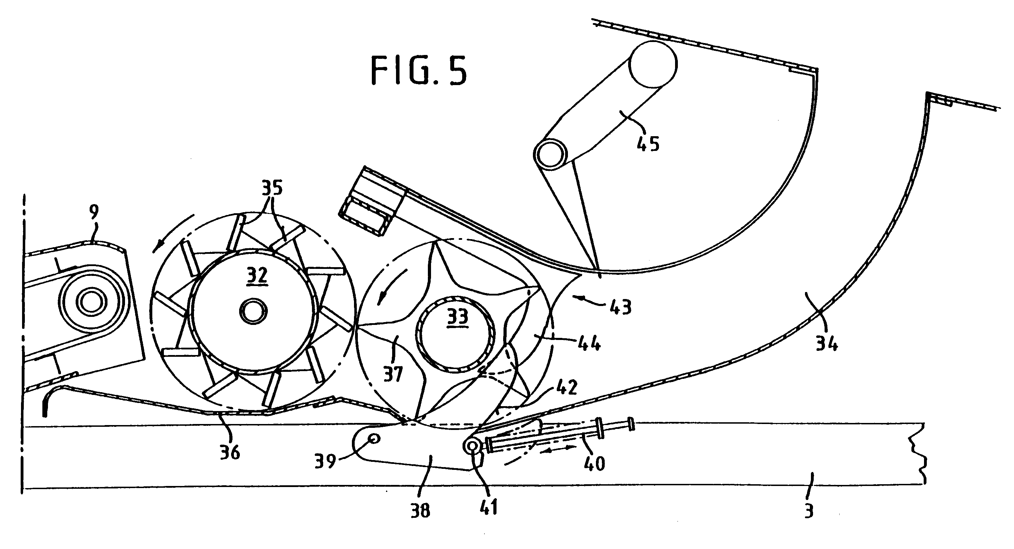

Fig. 5 zeigt diese Partie in größerem Maßstab, die Fördertrommel 32 trägt auf ihrem Mantel unregelmäßig verteilte Förderpaddel 35, deren Flächen bezogen auf die Laufrichtung am Umfang zurückgeneigt sind. Die Paddel streichen mit minimalen Abstand über ein Bodenblech 36. Der Schneidrotor 33, der schneller als die Fördertrommel 32 läuft, ist aus etwa vierzig Messersternen 37 zusammengesetzt, denen paarweise je ein schwenkbares Gegenmesser 38 zugeordnet ist. Die gemeinsame Schwenkachse ist mit 39 bezeichnet. Zu jedem Gegenmesser 38 gehört eine von einer teleskopierbaren Federanordnung 40 getragene Rolle 41, welche auf den Messerrücken 42 drückt und das betreffende Messer elastisch in seiner Stellung hält. Bei Überlast kann das Gegenmesser 38 nachgeben, außerdem können wahlweise einzelne oder alle Gegenmesser 38 in eine unwirksame Stellung ausgeklappt werden. Die Messerspitze in dieser Stellung ist strichpunktiert angedeutet. Für die Wirkungsweise der Schneidtrommel 33 ist außerdem eine kammförmige Abstreifeinrichtung 43 von Bedeutung. Sie ist am Gestell fest angeordnet. Einzelne gestreckt sichelförmige Abstreifer 44 greifen von oben in den Laufkreis der Messersterne ein und verhindern somit einen Umlauf des geschnittenen Gutes. Dieses wird vielmehr in den Ladekanal 34 gedrückt, in welchem es von einer mehrteilig gelenkigen Stopfgabel 45, die durch Schlitze in der Kanaldecke eingreift, erfaßt und in die Ballenkammer hochgefördert wird.

Um die Maschine anderen Pflanzen und einem anderen Ernteverfahren anpassen zu können, sind in den Figuren 2 und 3 zwei weitere Arbeitsvorsätze gezeigt, die gewünschtenfalls an die erste Anschlußvorrichtung 12 des hochschwenkbaren Förderkanals 9 angesetzt werden können. Der Arbeitsvorsatz nach Fig. 2 dient zur Aufnahme bereits gemähter Pflanzen vom Boden und hat eine aus wenigstens einer Aufnehmerwalze 46 mit gesteuerten Zinken bestehende Pick-up. Darüber und etwas zurückgesetzt ist eine Querförderschnecke 47 angeordnet, welche das Gut zur Mitte bringt, so daß es durch den Förderkanal 9 abtransportiert werden kann. Fig. 3 zeigt einen Mähtisch mit Messerbalken 48, Haspel 49 und einer Querförderschnecke 50, wie er in ähnlicher Bauart bei Mähdreschern verwendet wird.
- 1: Vorderrad
- 2: lenkbare Hinterrad
- 3: Grundrahmen
- 4: Motor
- 5: Fahrerkabine
- 6: Ballenkammer
- 7: Kurbelantrieb
- 8: Preßkolben
- 9: Förderkanal
- 10: Schwenkachse
- 11: Bandförderer
- 12: Anschlußvorrichtung
- 13: Winkelgetriebe
- 14: Antriebswelle
- 15: Kurbelwelle
- 16: Schwungrad
- 17: Winkelgetriebe
- 18: Ketten
- 19: Keilriemenscheibe
- 20: Zahnrad
- 21: Zahnrad
- 22: Zahnrad
- 23: Zahnrad
- 24: Schwungscheibe
- 25: Aufbereiter
- 26: Anschlußvorrichtung
- 27: Trommelmähwerk
- 28: Trommel
- 29: Schneidscheibe
- 30: Aufbereiterwalze
- 31: Aufbereiterwalze
- 32: Fördertrommel
- 33: Schneidtrommel
- 34: Ladekanal
- 35: Förderpaddel
- 36: Bodenblech
- 37: Messerstern
- 38: Gegenmesser
- 39: Schwenkachse
- 40: Teleskopfeder
- 41: Rolle
- 42: Messerrücken
- 43: Abstreifeinrichtung
- 44: Abstreifer
- 45: Stopfgabel
- 46: Aufnehmerwalze
- 47: Querförderschnecke
- 48: Messerbalken
- 49: Haspel
- 50: Querförderschnecke

## Patentansprüche

1. Selbstfahrende Ballenpresse für auf dem Feld angebaute Pflanzen mit einem Fahrwerk (1,2,3), einem Motor (4), einem sich in Fahrtrichtung erstreckenden Preßkanal mit einem zugehörigen Kolben (8), einem von dem Motor (4) angetriebenen Kurbelgetriebe (7) mit quer zur Fahrtrichtung liegender Achse (15), das den Kolben (8) bewegt, und mit einer Einrichtung zum Zuführen des Erntegutes zu dem Preßkanal, dadurch gekennzeichnet, daß an der Fahrwerkfrontseite in der Mitte ein Fahrerhaus (5), hinter diesem der Motor (4) mit querliegender Achse und hinter diesem das Kurbelgetriebe (7) des in der Längsmittellinie des Fahrwerks liegenden Preßkanals angeordnet sind, wobei der Motor (4) mit dem Kurbelgetriebe (7) mechanisch getrieblich verbunden ist, daß die Zuführeinrichtung einen sich unter dem Fahrerhaus (5) und dem Motor (4) hindurch erstreckenden hochschwenkbaren Förderkanal (9) und einen unter dem Kurbelgetriebe erstreckenden in seinem Verlauf ansteigenden, von unten in den Preßkanal mündenden Ladekanal (34) umfaßt, wobei das vordere Aufnahmeende des Förderkanals (9) eine erste Anschlußvorrichtung (12) für einen von mehreren für verschiedene Pflanzen bestimmten und wahlweise ansetzbaren Arbeitsvorsätzen (z. B. 27) oder für einen Aufbereiter (30) aufweist und im Übergangsbereich zwischen dem hinteren Abgabeende des Förderkanals (9) und dem Eingang des Ladekanals (34) ein Aufbereiter (25, 33) angeordnet ist.

2. Ballenpresse nach Anspruch 1, dadurch gekennzeichnet, daß zum Antrieb des Kurbelgetriebes (7) eine in Fahrtrichtung nach vorne weisende und schräg nach unten geneigte, mit einem Schwungrad (16) bestückte Antriebswelle (14) vorgesehen ist, welche mit einem Winkelgetriebe (17) gekuppelt ist, dessen horizontale Eingangswelle mit dem Motor (4) mittels eines Ketten- (18) oder Riementriebs verbunden ist.

3. Ballenpresse nach Anspruch 1, dadurch gekennzeichnet, daß das Kurbelgetriebe (7) mit dem Motor (4) mittels eines Stirnradgetriebes (19 bis 23) verbunden ist.

4. Ballenpresse nach Anspruch 1, dadurch gekennzeichnet, daß als Arbeitsvorsatz ein reihenloses Trommelmähwerk (27) mit mehreren Mähtrommeln (28) vorgesehen ist.

5. Ballenpresse nach Anspruch 1, dadurch gekennzeichnet, daß als Arbeitsvorsatz eine Pick-up (46) mit nachgeschalteter, zur Mitte fördernder Querschnecke (47) vorgesehen ist.

6. Ballenpresse nach Anspruch 1, dadurch gekennzeichnet, daß als Arbeitsvorsatz ein Mähtisch mit Messerbalken (48), Haspeln (49) und Querförderschnecke (50) vorgesehen ist.

7. Ballenpresse nach Anspruch 1, dadurch gekennzeichnet, daß mittels der ersten Anschlußvorrichtung (12) an dem Förderkanal (9) ein Aufbereiter (25) angeschlossen und vor diesem mittels einer zweiten Anschlußvorrichtung (26) einer der Arbeitsvorsätze angebracht ist.

8. Ballenpresse nach Anspruch 7, dadurch gekennzeichnet, daß einem reihenlosen Trommelmähwerk (27) ein Aufbereiter (25) nachgeschaltet ist, der das Erntegut durch Knicken, Reißen, Schneiden und/oder Auffasern verändert.

9. Ballenpresse nach Anspruch 8, dadurch gekennzeichnet, daß der Aufbereiter (25) aus zwei zusammenwirkenden, mit Messerklingen bestückten Walzen (30, 31) besteht.

10. Ballenpresse nach Anspruch 1, dadurch gekennzeichnet, daß im Übergangsbereich von dem Arbeitsvorsatz zu dem Förderkanal eine Fördertrommel angeordnet ist.

11. Ballenpresse nach Anspruch 1, dadurch gekennzeichnet, daß der im Übergangsbereich vom Förderkanal (9) zum Ladekanal (34) angeordntete Aufbereiter einen vorzugsweise aus Messersternen (37) zusammengesetzten Schneidrotor (33) umfaßt.

12. Ballenpresse nach Anspruch 11, dadurch gekennzeichnet, daß dem Schneidrotor (33) wahlweise zuschaltbare Gegenmesser (38) zugeordnet sind.

13. Ballenpresse nach Anspruch 12, dadurch gekennzeichnet, daß dem Schneidrotor (33) eine sich im Querschnitt des Ladekanals (34) erstreckende Abstreifeinrichtung (43) zugeordnet ist.

14. Ballenpresse nach Anspruch 11, dadurch gekennzeichnet, daß zwischen dem Abgabeende des Förderkanals (9) und dem Schneidrotor (33) eine unterschlächtig wirkende Fördertrommel (32) angeordnet ist.

15. Ballenpresse nach Anspruch 14, dadurch gekennzeichnet, daß auf dem Mantel der Fördertrommel (32) stochastisch verteilte und/oder unterschiedlich lange Förderpaddel (35) oder Zinkenelemente angeordnet sind.

16. Ballenpresse nach Anspruch 1, dadurch gekennzeichnet, daß eine automatische Höhensteuervorrichtung für die Arbeitsvorsätze bzw. den Ladekanal (9) vorgesehen ist, welche die Einhaltung einer konstanten Schnitthöhe über einer Boden- oder Eisoberfläche unterhalb einer liegenden Schneedecke ermöglicht.

17. Ballenpresse nach Anspruch 1, dadurch gekennzeichnet, daß sie ein Raupenfahrwerk, ein Halbraupenfahrwerk oder ein Fahrwerk mit mehr als zwei Achsen aufweist.

18. Ballenpresse nach Anspruch 1, dadurch gekennzeichnet, daß sie selbst oder auf einem mitgeführten Anhänger einen Laderaum oder eine Ladeplattform zum Einlagern und Mitführen mehreren Ballen aufweist.

19. Ballenpresse nach Anspruch 1, dadurch gekennzeichnet, daß sie selbst oder auf einem mitgeführten Anhänger eine Stapelvorrichtung zum Absetzen und Stapeln von Erntegutballen aufweist.

20. Ballenpresse nach Anspruch 1, dadurch gekennzeichnet, daß eine Vorrichtung zum Ausbringen organischer oder anorganischer, insbesondere flüssiger Hilfsstoffe auf das Erntegut vorgesehen ist, welche dessen Lagerfähigkeit verbessern.

21. Ballenpresse nach Anspruch 1, dadurch gekennzeichnet, daß sie auf dem Fahrgestell oder einem Anhänger eine Zusatzeinrichtung zum Einschlagen der Ballen in eine möglichst dichte Umhüllung aufweist.

## Claims

1. Automotive baling press for plants cultivated in the field with a chassis (1, 2, 3), a engine (4), a baling channel extending in the direction of travel with a piston (8), a crank mechanism (7) driven by the engine (4) with an axle (15) positioned at right angles to the direction of travel, which crank mechanism moves the piston (8), and with a device for feeding the crop into the baling channel, characterised in that a driver's cab (5) is arranged at the centre of the chassis front side, the engine (4) with a transverse axle is arranged behind the driver's cab and the crank mechanism (7) of the baling channel is arranged behind the engine, whereby the engine (4) is mechanically connected with the crank mechanism (7) by gearing, in that the feeder device comprises an upwards pivotable conveyor channel (9) extending under the driver's cab (5) and the engine (4) and a loading channel (34) extending under the crank mechanism, rising along its course and exiting from below into the baling channel, whereby the front receiving end of the conveyor channel (9) comprises a first connection device (12) for one of several attachments (e.g. 27) which are designed for different plants and can be fitted as required, or for a processor (30) and a processor (25, 33) is arranged in the transfer region between the rear output end of the conveyor channel (9) and the input of the loading channel (34).

2. Baling press according to Claim 1, characterised in that for driving the crank mechanism (7) a drive shaft (14) is provided which points forwards in the direction of travel, inclines diagonally downwards and is fitted with a flywheel (16), which drive shaft is coupled with an angular gear (17), the horizontal input shaft of which is connected to the engine (4) by means of a chain (18) or belt drive.

3. Baling press according to Claim 1, characterised in that the crank mechanism (7) is connected to the engine (4) by means of a cylinder gear (19 to 23).

4. Baling press according to Claim 1, characterised in that a row-less cylinder cutter bar (27) with several cutter cylinders (28) is provided as an attachment.

5. Baling press according to Claim 1, characterised in that a pick-up (46) topped by a transverse screw (47) conveying to the centre is provided as an attachment.

6. Baling press according to Claim 1, characterised in that a cutter table with cutter bars (48), reels (49) and a transverse conveyor screw (50) is provided as an attachment.

7. Baling press according to Claim 1, characterised in that a processor (25) is connected to the conveyor channel (9) by means of a first connection device (12) and one of the attachments is fitted in front of the processor by means of a second connection device (26).

8. Baling press according to Claim 7, characterised in that a processor (25) is connected to a row-less cylinder cutter bar (27) which processor alters the crop by bending, breaking, cutting and/or fraying.

9. Baling press according to Claim 8, characterised in that the processor (25) comprises two interacting rollers (30, 31) fitted with blades.

10. Baling press according to Claim 1, characterised in that a conveyor drum is arranged in the transfer region from the attachment to the conveyor channel.

11. Baling press according to Claim 1, characterised in that the processor arranged in the transfer region from the conveyor channel (9) to the loading channel (34) comprises a cutting rotor (33) preferably having star blades (37).

12. Baling press according to Claim 11, characterised in that optionally switchable counter blades (38) are allocated to the cutting rotor (33).

13. Baling press according to Claim 12, characterised in that a scraper device (43) extending in the cross section of the loading channel (34) is allocated to the cutting rotor (33).

14. Baling press according to Claim 11, characterised in that an undershot acting conveyor drum (32) is arranged between the output end of the conveyor channel (9) and the cutting rotor (33).

15. Baling press according to Claim 14, characterised in that randomly distributed conveyor paddles (35) possibly also of different lengths or toothed elements are arranged on the sleeve of the conveyor drum (32).

16. Baling press according to Claim 1, characterised in that an automatic height control device is provided for the attachments or the loading channel (9) which enables a constant cut height to be maintained over a ground or ice surface below a layer of snow.

17. Baling press according to Claim 1, characterised in that it comprises a crawler-type chassis, a semi-crawler chassis or an chassis with more than two axles.

18. Baling press according to Claim 1, characterised in that it comprises itself or on a trailer a loading space or a loading platform for placing and conveying several bales.

19. Baling press according to Claim 1, characterised in that it comprises itself or on a trailer a stacking device for setting down and stacking bales of crops.

20. Baling press according to Claim 1, characterised in that a device for applying organic or inorganic additives, in particular liquid additives, onto the crop is provided which improves the crop's suitability for storage.

21. Baling press according to Claim 1, characterised in that on the vehicle frame or on a trailer it comprises an additional device for wrapping the bales in a tight a cover as possible.

## Revendications

1. Presse à bottes automobile pour des plantes cultivées dans un champ, comportant un mécanisme de roulement (1,2,3), un moteur (4), un canal de pressage qui s'étend en direction de roulement et qui comporte un piston associé (8), un biellage (7) qui est entraîné par le moteur (4), qui présente un axe (15) situé transversalement à la direction d'avance, et qui déplace le piston (8), et un dispositif pour amener le produit de la récolte vers le canal de pressage,
caractérisée en ce que, sur la face frontale du mécanisme de roulement, au centre, sont agencés une cabine de conducteur (5), derrière celle-ci le moteur (4) qui présente un axe situé transversalement, et derrière celui-ci le biellage (7) du canal de pressage situé dans la ligne centrale longitudinale du mécanisme de roulement, le moteur (4) étant relié au biellage (7) de façon à pouvoir être entraîné mécaniquement, en ce que le dispositif d'amenée englobe un canal d'avance (9) pouvant être pivoté vers le haut et s'étendant au-dessous de la cabine du conducteur (5) et du moteur (4), et un canal de chargement (34) s'étendant au-dessous du biellage, présentant une extension qui s'élève et débouchant du bas dans le canal de pressage, l'extrémité de réception avant du canal d'avance (9) présentant un premier dispositif de raccordement (12) pour l'un de plusieurs raccords de travail (par exemple 27) prévus pour différentes plantes et pouvant être montés au choix, ou pour un préparateur (30), et un préparateur (25,33) étant agencé dans la zone de transfert entre l'extrémité de transmission arrière du canal d'avance (9) et l'entrée du canal de chargement (34).

2. Presse à bottes selon la revendication 1,
caractérisée en ce que, pour l'entraînement du biellage (7), on prévoit un arbre d'entraînement (14) s'étendant vers l'avant en direction de roulement, incliné vers le bas et muni d'une roue volante (16), l'arbre d'entraînement étant couplé à un engrenage angulaire (17), dont l'arbre d'entrée horizontal est relié au moteur (4) au moyen d'un entraînement à chaînes (18) ou à courroie.

3. Presse à bottes selon la revendication 1,
caractérisée en ce que le biellage (7) est relié au moteur (4) au moyen d'un engrenage droit (19 à 23).

4. Presse à bottes selon la revendication 1,
caractérisée en ce que l'on prévoit, comme raccord de travail, une faucheuse à tambour (27) sans rangée, comportant plusieurs tambours faucheurs (28).

5. Presse à bottes selon la revendication 1,
caractérisée en ce que l'on prévoit, comme raccord de travail, une ramasseuse-botteleuse (46) qui comporte une hélice transversale (47) montée en aval et provoquant le déplacement vers le milieu.

6. Presse à bottes selon la revendication 1,
caractérisée en ce que l'on prévoit, comme raccord de travail, une table faucheuse comportant une barre de coupe (48), des rabatteurs (49) et une hélice d'avance transversale (50).

7. Presse à bottes selon la revendication 1,
caractérisée en ce qu'un préparateur (25) est raccordé au canal d'avance (9) au moyen du premier dispositif de raccordement (12), et l'un des raccords de travail est monté devant celui-ci au moyen d'un deuxième dispositif de raccordement (26).

8. Presse à bottes selon la revendication 7,
caractérisée en ce qu'en aval d'une faucheuse à tambour (27) sans rangée, est monté un préparateur (25) qui modifie le produit de la récolte par pliage, déchirement, découpe, et/ou défibrage.

9. Presse à bottes selon la revendication 8,
caractérisée en ce que le préparateur (25) est constitué de deux rouleaux (30,31) coopérant et munis de lames.

10. Presse à bottes selon la revendication 1,
caractérisée en ce qu'un tambour d'avance est agencé dans la zone de transfert du raccord de travail vers le canal d'avance.

11. Presse à bottes selon la revendication 1,
caractérisée en ce que le préparateur agencé dans la zone de transfert du canal d'avance (9) vers le canal de chargement (34) comprend un rotor de coupe (33) formé de préférence de lames à étoiles (37).

12. Presse à bottes selon la revendication 11,
caractérisée en ce que des contre-lames (38) pouvant être commutées au choix sont associées au rotor de coupe (33).

13. Presse à bottes selon la revendication 12,
caractérisée en ce qu'un dispositif de raclement (43), s'étendant dans la section transversale du canal de chargement (34), est associé au rotor de coupe (33).

14. Presse à bottes selon la revendication 11,
caractérisée en ce qu'un tambour d'avance (32) mû d'en-dessous est agencé entre l'extrémité de transmission du canal d'avance (9) et le rotor de coupe (33).

15. Presse à bottes selon la revendication 14,
caractérisée en ce que des palettes d'avance (35) ou des éléments à dents, répartis de façon aléatoire et/ou de longueurs différentes, sont agencés sur l'enveloppe du tambour d'avance (32).

16. Presse à bottes selon la revendication 1,
caractérisée en ce que l'on prévoit un dispositif automatique de commande de hauteur pour les raccords de travail ou le canal de chargement (9), lequel permet de maintenir une hauteur de coupe constante au-dessus du sol ou de la surface de la glace au-dessous d'une couche de neige.

17. Presse à bottes selon la revendication 1,
caractérisée en ce qu'elle comporte un mécanisme de roulement à chenilles, un mécanisme de roulement à moitié chenillé ou un mécanisme de roulement comportant plus de deux essieux.

18. Presse à bottes selon la revendication 1,
caractérisée en ce qu'elle comporte elle-même ou sur une remorque tractée, un espace de chargement ou une plate-forme de chargement, pour stocker et emmener plusieurs bottes.

19. Presse à bottes selon la revendication 1,
caractérisée en ce qu'elle comporte elle-même ou sur une remorque tractée, un dispositif d'empilage pour enlever et empiler des bottes de produit de la récolte.

20. Presse à bottes selon la revendication 1,
caractérisée en ce que l'on prévoit un dispositif pour amener sur le produit de la récolte des matières consommables, organiques ou anorganiques, en particulier fluides, qui améliorent son aptitude au stockage.

21. Presse à bottes selon la revendication 1,
caractérisée en ce qu'elle comporte, sur le bâti de roulement ou sur une remorque, un dispositif auxiliaire pour revêtir les bottes d'une enveloppe la plus étanche possible.
